# EUROPEAN PATENT APPLICATION

(11) **EP 4 765 217 A1**
(43) Date of publication of application: **24.06.2026**
(21) Application number: 25797771.0
(22) Date of filing: 01.04.2025
(51) Int. Cl.: H01M 4/04, G01B 11/02, B30B 15/16, B30B 3/04

(54) **CALENDERING SYSTEM, ELECTRODE MANUFACTURING METHOD USING SAME, AND ELECTRODE MANUFACTURED THEREBY**

(30) Priority: 03.05.2024 KR 20240059448
(71) Applicant: LG Energy Solution, Ltd., Seoul 07335 (KR)
(72) Inventor: LIM, Dong Hun, Daejeon 34122 (KR); HWANG, Koo Youn, Daejeon 34122 (KR); CHA, Myeong Geun, Daejeon 34122 (KR); JEONG, Yun Hyeock, Daejeon 34122 (KR)
(74) Representative: Goddar, Heinz J.
(86) International application number: PCT/KR2025/004220
(87) International publication number: WO 2025/230146

(57) **Abstract**

A calendering system according to the present disclosure includes a calendering apparatus configured to compress a mixture including an active material and a binder, the calendering apparatus including a calender roll having an overlapping area positioned to overlap with the mixture and a non-overlapping area positioned to limit overlapping with the mixture; a pair of sensor devices configured to sense the mixture having a pair of edges adjacent to the non-overlapping area and the non-overlapping area; and a control unit configured to determine a thickness at each of the pair of edges of the mixture based on information of the mixture and the non-overlapping area sensed by the pair of sensor devices.

## Description

### TECHNICAL FIELD

### CROSS-REFERENCE TO RELATED APPLICATIONS

The present application is based on and claims priority from Korean Patent Application No. 10-2024-0059448, filed on May 3, 2024, with the Korean Intellectual Property Office, the disclosure of which is incorporated herein in its entirety by reference.

### TECHNICAL FIELD

The present disclosure relates to a calendering system, an electrode manufacturing method performed thereby, and an electrode manufactured thereby. More specifically, the present disclosure relates to a calendering system for compressing a mixture included in the electrode so that the thickness of the mixture is uniform, an electrode manufacturing method performed thereby, and an electrode manufactured thereby.

### BACKGROUND ART

A secondary battery is applied and used not only in small products such as digital cameras, P-DVDs, MP3Ps, mobile phones, PDAs, portable game devices, power tools, and E-bikes, but also in large products requiring high power such as electric vehicles or hybrid vehicles, in power storage devices that store surplus generated power or renewable energy, and in power storage devices for backup.

Normally, a secondary battery is manufactured by applying an electrode active material slurry to a positive electrode current collector and a negative electrode current collector to form an electrode active material layer, then drying and rolling to manufacture a positive electrode and a negative electrode, and stacking them on both sides of a separator to form an electrode assembly having a predetermined shape, then accommodating the electrode assembly in a battery case, injecting an electrolyte, and sealing.

Meanwhile, in the process of drying the electrode active material slurry, as the solvent contained in the slurry evaporates, defects such as pinholes or cracks may occur in the electrode active material layer formed on the current collector. Additionally, since the inside and outside of the electrode active material slurry are not uniformly dried during the drying process, there is a concern about the powder floating phenomenon due to the difference in solvent evaporation rate, that is, the powder in the part that is dried first rises and forms a gap with the part that is dried relatively later, which may degrade the electrode quality.

In order to solve the above problem, drying devices capable of controlling the evaporation rate of the solvent so that the inside and outside of the electrode active material slurry may be uniformly dried are being considered, but these drying devices are very expensive and require considerable cost and time to operate, which is disadvantageous in terms of manufacturing processability.

On the other hand, the solvent included in the typical electrode active material slurry is N-methyl-2-pyrrolidone (NMP), which has a high boiling point and thus requires high heat energy and a very long drying furnace to dry it, thereby being very disadvantageous for mass production. Additionally, N-methyl-2-pyrrolidone (NMP) is a toxic substance and is harmful to living organisms, so that it has a disadvantage of being not eco-friendly.

Therefore, recently, research on dry electrodes that manufacture electrodes without using a solvent has been actively conducted. The dry electrode is generally manufactured by laminating a free-standing type dry electrode film that contains a mixture of an active material, binder, and conductive material, and is manufactured in the form of a sheet onto a current collector. This dry electrode film includes a process of manufacturing a free-standing film by first mixing an electrode active material, a carbon material as a conductive material, and a fiberizable binder together using a blender or the like, applying a shear force through a process such as kneading to fiberize the binder, and then calendering the obtained mixture into a film form.

At this time, in the process of calendering the dry electrode film, the dry electrode film needs to have a uniform thickness. If the thickness of the dry electrode film is not uniform, there may be a problem of uneven generation of electricity in the electrode formed through the dry electrode film. Furthermore, as the thickness of the electrode is not uniform, a gap may be formed in the electrode stack formed by stacking it, which may cause a problem of reduced energy density per volume.

### SUMMARY

### TECHNICAL PROBLEM

The present disclosure is designed to solve the above-described problems, and therefore the present disclosure is directed to providing a calendering system for uniformly calendering a mixture so that the thickness of the electrode is uniform, an electrode manufacturing method performed thereby, and an electrode manufactured thereby.

Technical problems to be solved by the present disclosure are not limited to the above-described problems, and other problems not mentioned herein may be clearly understood by those having ordinary skill in the art from the following description of the present disclosure.

### TECHNICAL SOLUTION

A calendering system according to one embodiment of the present disclosure includes a calendering apparatus configured to compress a mixture including an active material and a binder, the calendering apparatus including a calender roll having an overlapping area positioned to overlap with the mixture and a non-overlapping area positioned to limit overlapping with the mixture; a pair of sensor devices configured to sense the mixture having a pair of edges adjacent to the non-overlapping area and the non-overlapping area; and a control unit configured to determine a thickness at each of the pair of edges of the mixture based on information of the mixture and the non-overlapping area sensed by the pair of sensor devices.

The sensor device may include a laser profile measuring device.

The thickness at the pair of edges of the mixture may be defined as the distance from the sensor device to the non-overlapping area minus the distance to the edge of the mixture.

The control unit may be configured to determine whether the thickness of the mixture is constant between the pair of edges based on the determined thickness information at each of the pair of edges of the mixture.

The control unit may be configured to determine that the calendering is normal when the difference between the determined thicknesses at each of the pair of edges of the mixture is less than or equal to a predetermined range.

The control unit may be configured to control the calender roll to reduce a difference in thickness when the difference between the determined thicknesses at each of the pair of edges of the mixture is greater than or equal to a predetermined range.

The calendering system may further include a moving device configured to move one end of the calender roll in the length direction or the other end positioned on the opposite side of the one end, wherein the control unit may be configured to control the moving device to move at least one of the one end or the other end of the calender roll when the difference between the determined thicknesses at each of the pair of edges of the mixture is greater than or equal to a predetermined range.

The pair of sensor devices may be positioned adjacent to a boundary of the non-overlapping area and the overlapping area.

The calender rolls may be provided in plurality so that the mixture is moved and compressed therebetween, and the pair of sensor devices may be provided in plurality to correspond to at least one of each of the plurality of calender rolls.

A virtual plane including a rotating shaft of each of the plurality of calender rolls may be defined, the plurality of calender rolls may include a first calender roll and a second calender roll adjacent to the first calender roll, an overlapping area of the second calender roll may be positioned on the opposite side to an overlapping area of the first calender roll with respect to the virtual plane, the plurality of pairs of sensor devices may include a first pair of sensor devices sensing the first calender roll and a second pair of sensor devices sensing the second calender roll, and the second pair of sensor devices may be positioned on the opposite side to the first pair of sensor devices with respect to the virtual plane.

The control unit may obtain information on the thickness of each of the mixture passing through the plurality of calender rolls based on information obtained from each of the plurality of pairs of sensor devices.

The control unit may control movement of the calender rolls to reduce the gap between the adjacent pair of calender rolls when the thickness of the mixture formed by the adjacent pair of the plurality of calender rolls exceeds a predetermined range.

The control unit may control movement of the calender rolls to widen the gap between the adjacent pair of calender rolls when the thickness of the mixture formed by the adjacent pair of the plurality of calender rolls is less than a predetermined range.

The control unit may determine that the edge of the mixture is damaged based on the determined thickness being zero at each of the pair of edges of the mixture.

The control unit may be configured to measure the surface uniformity of the calender roll when the mixture is not overlapped on the calender roll.

An electrode manufacturing method according to one embodiment of the present disclosure may include a preparation step of preparing a mixture including an active material and a binder; a compressing step of compressing the mixture by a calender roll, wherein the calender roll has an overlapping area positioned to overlap with the mixture and a non-overlapping area positioned to limit overlapping with the mixture; a sensing step of sensing the mixture having a pair of edges adjacent to the non-overlapping area and the non-overlapping area by a pair of sensor devices; and a determination step of determining a thickness at each of the pair of edges of the mixture based on information of the mixture and the non-overlapping area sensed by the pair of sensor devices.

The sensor device may include a laser profile measuring device.

The determination step may be performed to determine the thickness at the pair of edges of the mixture as the distance from the sensor device to the non-overlapping area minus the distance to the edge of the mixture.

The electrode manufacturing method may further include a control step of controlling the calender roll to reduce a difference in thickness when the difference between the thicknesses at each of the pair of edges of the mixture determined in the determination step is greater than or equal to a predetermined range.

An electrode according to one embodiment of the present disclosure may include a mixture including an active material and a binder; and a current collector to which the mixture is coupled, wherein the thickness of the mixture in the width direction may be uniform in one part and may increase in the width direction in another part.

### ADVANTAGEOUS EFFECTS

The calendering system according to the present disclosure may determine whether there is a thickness difference between both edges of the mixture by calculating the height difference between both edges of the mixture and the calender roll using a pair of sensor devices.

The calendering system according to the present disclosure may uniformly calender the mixture so that the thickness of the electrode is uniform by controlling the position of the calender roll based on the determination whether there is a thickness difference between both edges of the mixture.

The calendering system according to the present disclosure may not degrade the quality of the mixture even if the thickness of the mixture is measured during the calendering process by measuring the thickness of the mixture in a non-contact manner.

The calendering system according to the present disclosure may quickly make the thickness of the mixture uniform by having a feedback system that uniformly controls the thickness of the mixture in real time by reflecting the thickness difference of the mixture determined during the calendering process.

The calendering system according to the present disclosure may, even if the desired thickness of the mixture is changed, easily reflect the same and may produce a mixture having the desired thickness.

The calendering system according to the present disclosure may easily recognize damage at the edges of the mixture.

The calendering system according to the present disclosure may easily recognize the surface uniformity of the calender roll.

Effects to be obtained by the present disclosure are not limited to the above-described effects, and other effects not mentioned herein may be clearly understood by those having ordinary skill in the art from the following description of the present disclosure.

### BRIEF DESCRIPTION OF THE DRAWINGS

FIG. 1 is an assembly view of a secondary battery illustrating that an electrode assembly according to a first embodiment of the present disclosure is assembled into a battery case.
FIG. 2 is a cross-sectional view of the electrode stack illustrated in FIG. 1.
FIG. 3 is a flow chart showing a manufacturing method of the electrode stack illustrated in FIG. 2.
FIG. 4 is a conceptual diagram illustrating performing the calendering step illustrated in FIG. 3.
FIG. 5 is a perspective view illustrating a part of the calendering system illustrated in FIG. 4.
FIG. 6 is a perspective view illustrating a part of the calendering system illustrated in FIG. 5 from a different angle.
FIG. 7 is a plan view illustrating the calender roll, the mixture, and the sensor device illustrated in FIG. 5.
FIG. 8 is a conceptual diagram illustrating that the sensor device illustrated in FIG. 5 senses the mixture and the calender roll.
FIG. 9 is a graph illustrating the results measured by FIG. 8.
FIG. 10 is a control block diagram of the calendering system illustrated in FIG. 5.
FIG. 11 is a flow chart of a calendering step performed by the control unit illustrated in FIG. 10.
FIG. 12 is a perspective view including the remaining part of the calendering system illustrated in FIG. 5.
FIG. 13 is a conceptual diagram for describing position control of the calender rolls illustrated in FIG. 12.
FIG. 14 is a conceptual diagram illustrating that the calender rolls illustrated in FIG. 13 move in a direction closer to each other.
FIG. 15 is a conceptual diagram illustrating that the calender rolls illustrated in FIG. 14 move in a direction farther away from each other.
FIG. 16 is a plan view illustrating a sensor device according to a second embodiment of the present disclosure.
FIG. 17 is a plan view illustrating a sensor device according to a third embodiment of the present disclosure.
FIG. 18 is a flow chart of a calendering step according to a fourth embodiment of the present disclosure.
FIG. 19 is a flow chart of a calendering step according to a fifth embodiment of the present disclosure.
FIG. 20 is a flow chart of a calendering step according to a sixth embodiment of the present disclosure.

### DETAILED DESCRIPTION

Hereinafter, preferred embodiments of the present disclosure will be described in detail with reference to the accompanying drawings to enable those having ordinary skill in the art to easily carry out the present disclosure. However, the present disclosure may be embodied in various different forms and is not limited or restricted by the following embodiments.

In order to clearly describe the present disclosure, detailed descriptions of portions unrelated to the present disclosure or known technologies that may unnecessarily obscure the gist of the present disclosure have been omitted. When assigning reference numerals to components in each drawing in this specification, the same or similar reference numerals are assigned to the same or similar components throughout the specification.

Additionally, the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The various embodiments and terms used herein are not intended to limit the technical features described herein to any particular embodiment, and should be understood to include various modifications, equivalents, or substitutes of the corresponding embodiments.

In connection with the description of the drawings, similar reference numerals may be used for similar or related components.

The singular form of a noun corresponding to an item may include one or more of the items, unless the relevant context clearly indicates otherwise.

As used herein, each of the phrases such as "A or B," "at least one of A and B," "at least one of A or B," "A, B, or C," "at least one of A, B, and C," and "at least one of A, B, or C" may include any one of the items listed together in the corresponding phrase, or all possible combinations thereof.

The term "and/or" includes any combination of a plurality of related listed components, or any one of a plurality of related listed components.

Terms such as "first", "second" may be used simply to distinguish one such component from another such component, and do not limit such components in any other respect (e.g., importance or order).

When a component (e.g., a first component) is referred to as "coupled" or "connected" to another component (e.g., a second component), with or without the terms "functionally" or "communicatively," it means that the component may be connected to the other component directly (e.g., wired), wirelessly, or through a third component.

The terms "include" or "have" are intended to designate the presence of features, numbers, steps, actions, components, parts, or combinations thereof described herein, and do not preclude the presence or addition of one or more other features, numbers, steps, actions, components, parts, or combinations thereof.

When a component is said to be "connected", "coupled", "supported" or "in contact" with another component, this includes not only cases where the components are directly connected, coupled, supported or in contact, but also cases where the components are indirectly connected, coupled, supported or in contact through a third component.

When a component is said to be positioned "on" another component, this includes not only cases where a component is in contact with another component, but also cases where another component exists between the two components.

Meanwhile, the terms "upper-lower direction", "lower side", and "front-back direction" used in the following description are defined based on the drawings, and the shape and position of each component are not limited by these terms.

Hereinafter, embodiments according to the present disclosure will be described in detail with reference to the accompanying drawings. The following embodiments are divided into the first and second embodiments for convenience, and other embodiments may be additionally described in the description of each embodiment.

### First embodiment

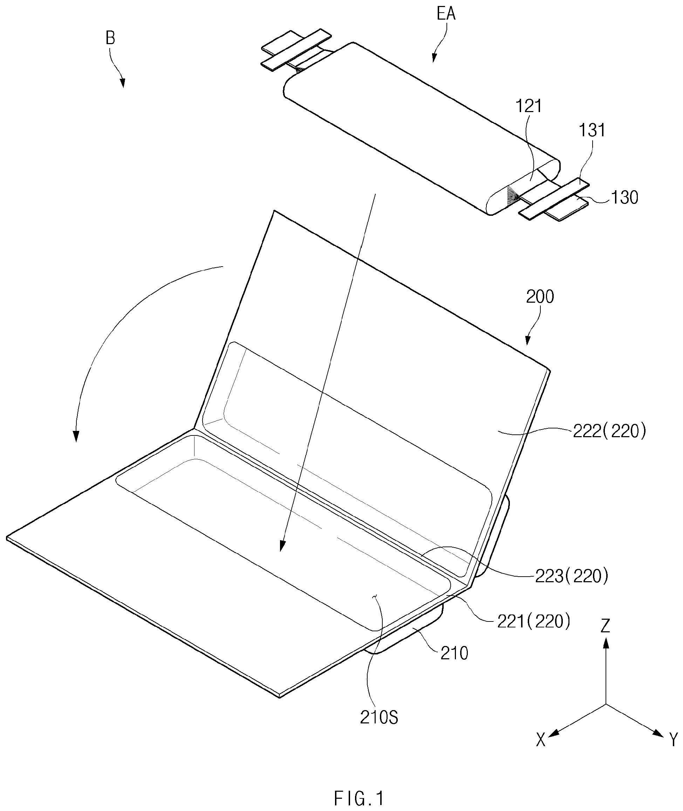

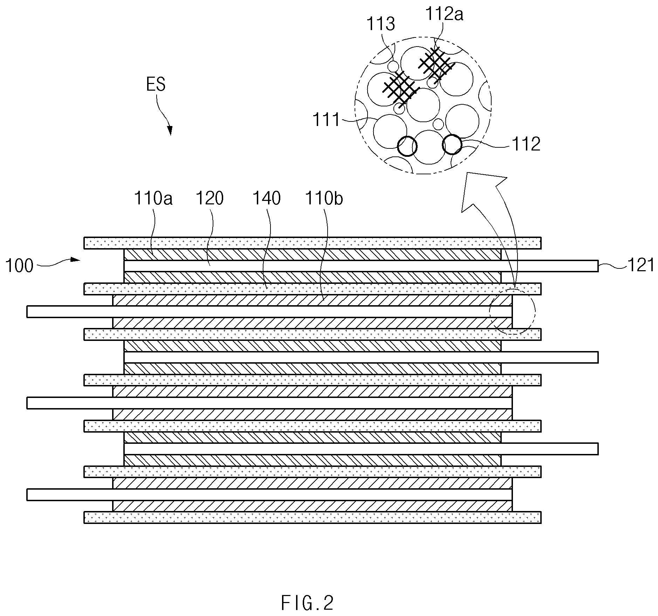

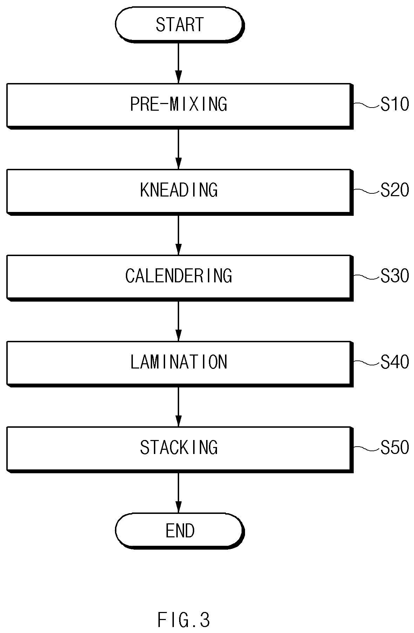

FIG. 1 is an assembly view of a secondary battery illustrating that an electrode assembly according to a first embodiment of the present disclosure is assembled into a battery case. FIG. 2 is a cross-sectional view of the electrode stack illustrated in FIG. 1. FIG. 3 is a flow chart showing a manufacturing method of the electrode stack illustrated in FIG. 2.

Referring to FIGS. 1 to 3, a secondary battery B according to the first embodiment of the present disclosure will be described.

As illustrated in FIG. 1, a secondary battery B for generating electricity may be provided. The secondary battery B may include an electrode assembly EA and/or a battery case 200 accommodating the electrode assembly EA. The type of the secondary battery B may be determined according to the shape or type of the battery case 200. For example, if the battery case 200 is cylindrical, it may be referred to as a cylindrical secondary battery B, and if the battery case 200 is prismatic, it may be referred to as a prismatic secondary battery B. If the battery case 200 is manufactured using a pouch film, the secondary battery B may be referred to as a pouch-type secondary battery B. The drawings of the present disclosure and the following description are on the assumption that the secondary battery B is a pouch-type secondary battery B. However, the idea of the present disclosure may still be applied not only to the case where the secondary battery B is a pouch-type secondary battery B, but also to the case where the secondary battery B is a cylindrical secondary battery B and a prismatic secondary battery B.

At this time, the electrode assembly EA may include an electrode 100 to be described later, and may be an assembly in which configurations related to the electrode 100 are collected together. The electrode 100 may be configured to include a reactant that reacts to generate electricity. The battery case 200 may protect the electrode assembly EA from impact by covering this electrode assembly EA. In reacting to generate electricity, the electrode assembly EA may require an electrolyte so that ions may move, as described later. The battery case 200 may provide the electrolyte to the electrode assembly EA by accommodating the electrolyte together with the electrode assembly EA. Furthermore, the electrolyte may generally refer to a liquid electrolyte, but is not limited thereto, and the idea of the present disclosure may be applied to a solid electrolyte as well.

As illustrated in FIG. 1, the battery case 200 may be formed by a pouch film. As an example of the battery case 200, the battery case 200 of the pouch-type secondary battery B will be described.

The pouch film forming the pouch, which is an example of the battery case 200, may include a plurality of layers. The pouch film may include a sealant layer and a barrier layer positioned on an outer side of the sealant layer. It may include a surface protection layer positioned on an outer side of the barrier layer. At this time, the sealant layer may have a polymer material such as polypropylene, the barrier layer may have a metal material such as aluminum, and the surface protection layer may have a polymer material such as nylon. At this time, the fusion to be described later may mean that the pouch films facing each other are coupled as the sealant layers facing each other are melted.

The pouch may be made of a highly flexible material to accommodate the electrode assembly EA therein. When drawing and molding a flexible pouch film using a punch (not shown) or the like, a part thereof may be stretched to form a receiving portion 210 having a pocket-shaped electrode receiving space 210S, thereby manufacturing a pouch. The pouch may accommodate and seal the electrode assembly EA so that a part of the electrode lead 130 is exposed.

When molding the receiving portion 210 on the pouch film, only one receiving portion 210 may be formed on one pouch film, but is not limited thereto, and two receiving portions 210 may be drawn and molded adjacent to each other on one pouch film. Then, two receiving portions 210 adjacent to each other may be formed. Each of the receiving portions 210 may have the same depth, but is not limited thereto, and the depths of each of the receiving portions 210 may be different from each other. After accommodating an electrode assembly EA in one receiving portion 210, the pouch may be folded around the axis so that another receiving portion 210 faces the receiving portion 210. Accordingly, another receiving portion 210 may accommodate the electrode assembly EA from the upper side. Since two receiving portions 210 accommodate one electrode assembly EA, an electrode assembly EA having a thicker thickness may be accommodated compared to when there is only one receiving portion 210. Additionally, as the pouch is folded, each of the side portions 220 is integrally connected to form a folding portion 223, and thus when performing a sealing process later, the number of sides to be sealed may be reduced. Therefore, the process speed may be improved, and the number of sealing processes may be reduced. For convenience of description, the battery case 200 to be described later is described on the assumption that two receiving portions 210 are formed in one pouch film.

The side portion 220 may include a lead sealing portion 221 configured to be positioned corresponding to the electrode lead 130 and a degas portion 222 connected to the lead sealing portion 221. First, the lead sealing portion 221 may be sealed by fusing. Thereafter, an electrolyte may be injected into the electrode receiving space 210S through the degas portion 222 that is not yet sealed, and the degas portion 222 may be sealed by fusing. Thereafter, an activation process may be performed, and when the gas generated through the activation process moves into the inside of the degas portion 222, a degassing process for removing the remaining gas may be performed. After the degas portion 222 is sealed again, a trimming process in which unnecessary portions are cut so that the degas portion 222 has a predetermined width may be performed. Thereafter, the degas portion 222 may be folded to reduce the width to form the folding portion 223.

As illurtrated in FIG. 2, the electrode assembly EA may be formed by alternately stacking the electrode 100 and the separator 140. The electrode 100 may be manufactured by applying a mixture 110 of an active material 111, a binder 112, a conductive material 113, and the like to a current collector 120. Depending on the type of the active material 111, the electrode 100 may be a positive electrode 100 or a negative electrode 100. The positive electrode 100 and the negative electrode 100 may interact with each other to generate electricity. More specifically, for example, the active material 111 included in the positive electrode 100 may include lithium, and the active material 111 included in the negative electrode 100 may include graphite. Lithium ions may move to the positive electrode 100 or the negative electrode 100 depending on the charging or discharging of the secondary battery B, and electricity may be generated in this process. The configuration of the electrode assembly EA will be described in more detail below.

The electrode 100 may include a current collector 120 and a mixture 110 applied or coupled to the current collector 120. For example, as illustrated in FIG. 2, the mixture 110 may be applied to both surfaces of the current collector 120. Here, the current collector 120 may be, for example, a thin metal. The type of the metal may vary depending on the polarity of the electrode 100. As illustrated in FIG. 2, electricity may be generated, for example, as lithium moves between the positive electrode mixture 110a and the negative electrode mixture 110b facing each other with the separator 140 interposed therebetween. At this time, the separator 140 may be configured to allow lithium to pass through. The generated electricity may be moved through the current collector 120. The current collector 120 may have an electrode tab 121 formed at an end where no active material 111 is positioned.

A plurality of electrodes 100 may be alternately stacked with the separator 140 to form an electrode stack ES. Electrode leads 130 may be provided to collect respective electrode tabs 121 of the plurality of electrodes 100 included in the electrode stack ES. The electrode tabs 121 having the same polarity may be collected, and the electrode leads 130 may be coupled to portions of the collected electrode tabs 121. For example, as illustrated in FIG. 1, a plurality of electrode tabs 121 having the positive polarity may be positioned forward, a plurality of electrode tabs 121 having the negative polarity may be positioned backward, and the electrode tabs 121 having the positive polarity may be welded and coupled, and then the electrode leads 130 may be coupled to the ends of the welded electrode tabs 121 by welding or the like. The electrode tabs 121 having the negative polarity may also be formed through the same process as the electrode tabs 121 having the positive polarity. As described above, the generated electricity may be moved from the electrode assembly EA to the outside of the electrode assembly EA through the electrode tab 121 and the electrode lead 130. The electrode lead 130 may have one end connected to the electrode tab 121 and the other end protruding outward from the battery case 200. Accordingly, a configuration requiring electricity may obtain electricity from the secondary battery B by contacting the electrode lead 130.

As illustrated in FIG. 1, the electrode assembly EA may include an insulating portion 131 surrounding a part of the electrode lead 130. The insulating portion 131 may be positioned to correspond to a position where the side portion 220 to be described later is fused. When the side portions 220 facing each other are fused to each other, the insulating portion 131 may be positioned between the side portions 220 to adhere the electrode lead 130 to the pouch. And, it is possible to prevent electricity generated from the electrode assembly EA from flowing to the pouch through the electrode lead 130 and maintain the sealing of the pouch. Therefore, this insulating portion 131 may be made of a nonconductive material that does not conduct electricity well. For example, the insulating portion 131 may be an insulating tape that is easily attached to the electrode lead 130 and has a relatively thin thickness. However, the present disclosure is not limited thereto, and various members may be used as long as the electrode lead 130 may be insulated.

If the mixture 110 described above includes a solvent, it is necessary to evaporate the solvent. In the process of drying the mixture 110, as the solvent contained in the mixture 110 evaporates, defects such as pinholes or cracks may occur in the mixture 110 formed on the current collector 120. Additionally, since the inside and outside of the electrode 100 active material 111 slurry are not uniformly dried during the drying process, there is a concern about the powder floating phenomenon due to the difference in solvent evaporation rate, that is, the powder in the part that is dried first rises and forms a gap with the part that is dried relatively later, which may degrade the electrode 100 quality.

In order to solve the above problem, drying devices capable of controlling the evaporation rate of the solvent so that the inside and outside of the electrode 100 active material 111 slurry may be uniformly dried are being considered, but these drying devices are very expensive and require considerable cost and time to operate, which is disadvantageous in terms of manufacturing processability.

On the other hand, the solvent included in the mixture 110 including a typical solvent is N-methyl-2-pyrrolidone (NMP), which has a high boiling point and thus requires high heat energy and a very long drying furnace to dry it, thereby being very disadvantageous for mass production. Additionally, N-methyl-2-pyrrolidone (NMP) is a toxic substance and is harmful to living organisms, so that it has a disadvantage of being not eco-friendly.

To solve this problem, a dry electrode 100 manufactured using an active material 111 that does not use a solvent may be prepared. The electrode 100 described in the present disclosure may be viewed as a dry electrode 100 manufactured using a mixture 110 that does not use a solvent. Alternatively, it may be applied to an electrode 100 that processes a mixture 110 using a kneading process used below.

The dry electrode 100 may be typically manufactured through the following processes. As illustrated in FIG. 3, the dry electrode 100 may be manufactured through a pre-mixing step S10, a kneading step S20, a calendering step S30, a lamination step S40, and/or a stacking step S50.

First, a mixture 110 including an active material 111, a conductive material 113, and/or a binder 112 may be prepared to form a dry electrode 100. In particular, the binder 112 may form fibers as the crystallized structure is destroyed. The fibers formed by the destruction of the binder 112 may couple the active material 111 to each other. The degree of destruction of the crystallized structure of the binder 112 may be described by the degree of crystallinity or the degree of fiberization. Here, the degree of crystallinity of the binder 112 may refer to the ratio of the binder 112 having a crystallized structure among the total binder 112, and the degree of fiberization of the binder 112 may refer to the ratio of the fiberized binder 112 among the total binder 112.

The pre-mixing step S10 may be a step of evenly mixing the mixture 110. For example, when the active material 111, the conductive material 113, and/or the binder 112 are provided in the form of a powder, the powder may need to be evenly mixed to prevent quality differences according to the position of the electrode 100 to be completed. In the pre-mixing step S10, a part of the binder 112 may be fiberized.

If the fiberization of the binder 112 does not occur in the pre-mixing step S10, it may be difficult to knead the mixture 110 by the kneading step S20 to be described later. The mixture 110 may be prepared in a powder state before performing the pre-mixing step S10. This is because the active material 111, the binder 112, and the conductive material 113 mentioned above are generally prepared in a powder state. Since the mixture 110 for making the dry electrode does not include a solvent, there may be no factor that causes the mixture 110 to stick together. If the kneading step S20 is performed on the mixture 110 in this powder state, a shear force is applied to the mixture 110 in the kneading step S20 to break the crystals of the binder 112, which allows to proceed with fiberization. However, if a shear force is applied to the mixture 110, the particles of the powder mixture 110 may only move while separating from each other, and the crystals of the binder 112 may not be broken easily. If the binder 112 is partially fiberized in the pre-mixing step S10, the mixture 110 may be stuck together, for example, in a state like clay, and in this case, if a shear force is applied to the mixture 100, the binder 112 may not be moved by the applied shear force, and the crystals may break, resulting in fiberization. Therefore, in order for the mixture 110 to be kneaded, a part of the binder needs to be fiberized.

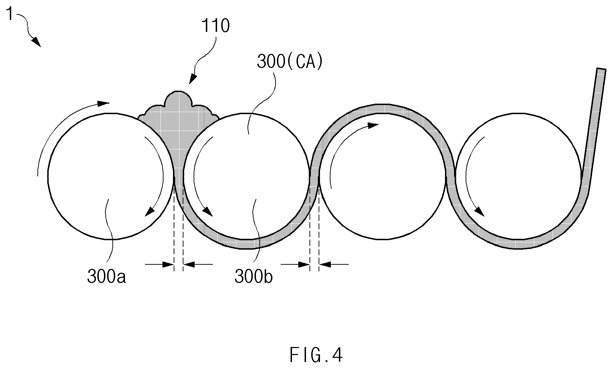

The kneading step S20 may mean a step of fiberizing the binder 112 by destroying the crystallized structure of the binder 112 mentioned above, as illustrated in FIG. 4. Here, kneading may mean applying pressure to the structure. The degree of fiberization of the binder 112 determined in the kneading step may determine the mechanical strength of the active material 111. The binder 112 may preferably have a degree of crystallinity or degree of fiberization having a predetermined range of values. This is because if the fiberization of the binder 112 is too little, it may be difficult to couple the mixture 110 together, and if the fiberization of the binder 112 is too much, the active material 111 may be easily broken. The active material 111 that has completed the kneading step may have a form of dough stuck together like clay. In particular, based on FIG. 4, the circular crystallized binder 112 may be transformed into a mesh-shaped fiberized binder 112a as the crystals are dissolved.

The calendering step S30 may mean a step of coupling the active material 111 that has completed the kneading step S20 to the current collector 120. For example, by placing the current collector 120 and the active material 111 between rollers and compressing them, the kneaded active material 111 may be coupled to the current collector 120. In the calendering step S20, the mixture 110 needs to be spread out evenly with a uniform thickness. If the thickness of the mixture 110 is not constant, there may be a problem of uneven generation of electricity in the electrode 100 formed by the mixture 110. Furthermore, as the thickness of the electrode 100 is not uniform, a gap may be formed in the electrode stack ES formed by stacking it, which may cause a problem of reduced energy density per volume. This calendering step S30 will be described in more detail below with reference to other drawings.

The lamination step S40 may be a step of manufacturing a semi-finished product by laminating an electrode 100 where a mixture 110 is coupled to a current collector 120 and a separator 140.

The stacking step S50 may be a step of forming a completed electrode stack ES by stacking the semi-finished product manufactured in the lamination step S40.

At this time, as mentioned above, the calendering step S30 may be an important step in determining the quality of the electrode 100. This will be described in more detail below with reference to the drawings.

FIG. 4 is a conceptual diagram illustrating performing the calendering step illustrated in FIG. 3. In particular, FIG. 4 is illustrated to look at the side of the calender roll 300.

Referring to FIG. 4, a calendering system 1 according to the first embodiment of the present disclosure is schematically described.

As illustrated in FIG. 4, a calendering system 1 may be provided to perform a calendering step S30. The calendering system 1 may be an array of devices for performing the calendering step S30. However, the idea of the present disclosure may be applied not only to a calendering system 1 defined as an array of a plurality of devices, but also to a calendering system 1 provided as a single device. For convenience of description, the description of the first embodiment is described assuming that the calendering system 1 includes the plurality of devices.

The calendering system 1 may include calender rolls 300 capable of compressing the mixture 110. The calender roll 300 may have, for example, a roller shape as illustrated in FIG. 4. However, the calender roll 300 may be interpreted as a concept including any device that compresses the mixture 110 despite its name. For example, the calender rolls 300 illustrated in FIG. 4 are provided in plurality, so that the mixture 110 is inserted between adjacent calender rolls 300, and the inserted mixture 110 is moved under pressure received from each of the adjacent calender rolls 300 according to the rotation of the calender rolls 300. In the present disclosure, for convenience of description, it will be assumed and described that the calender roll 300 is driven in this manner, but is not limited thereto. For example, the calender roll 300 may be provided unitarily and positioned with a constant gap from a flat plate, and the mixture 110 may be positioned in the gap formed between the flat plate and the calender roll 300, so that the mixture 110 positioned in the gap may be pressurized, compressed, and moved by the calender roll 300. Alternatively, furthermore, the calendering system 1 may be viewed as compressing the mixture 110 by a press device (not shown) rather than implementing a method of compressing the mixture 110 by a roll. In this way, the calendering system 1 or the calender roll 300 to which the idea of the present disclosure may be applied is not limited to those illustrated in the drawing, and may be applied without limitation as long as it may be capable of calendering. However, for convenience of description, it is assumed and described that the calender roll 300 is configured to compress the mixture 110 by allowing the mixture 110 to pass through the gap between the neighboring calender rolls 300.

In other words, as mentioned above, the calender roll 300 may be provided in plurality. For example, as illustrated in FIG. 4, the calender roll 300 may be provided to have four calender rolls. The plurality of calender rolls 300 may include a first calender roll 300a and a second calender roll 300b positioned close to the first calender roll 300a. The first calender roll 300a and the second calender roll 300b may be configured to rotate in opposite directions, so that the mixture 110 positioned between the first calender roll 300a and the second calender roll 300b is compressed and moved. For example, as illustrated in FIG. 4, when the mixture 110 is provided on the upper side between the first calender roll 300a and the second calender roll 300b, the first calender roll 300a rotates clockwise and the second calender roll 300b rotates counterclockwise, so that the mixture 110 may pass between the first calender roll 300a and the second calender roll 300b and move downward.

Additionally, the mixture 110 provided to the calendering system 1 may be a mixture 110 that has completed the kneading step S20. Therefore, the mixture 110 may be prepared as a dough rather than a powder. Accordingly, the mixture 110 passing through the first calender roll 300a and the second calender roll 300b may not fall downward immediately based on FIG. 4, but may be adhered to the surface of the second calender roll 300b and may be moved toward the gap between another calender roll 300 adjacent to the second calender roll 300b.

At this time, if only the first calender roll 300a and the second calender roll 300b are provided, calendering or compressing may be performed once. If, as illustrated in FIG. 4, four calender rolls 300 are provided, calendering or compressing may be performed three times. The mixture 110 may be easily compressed to a desired thickness by repeated calendering or compressing. For example, calendering or compressing may be performed first with a thick thickness by the calender roll 300 positioned at the front, and then calendering or compressing may be performed with a thinner thickness by the calender roll 300 positioned at the rear.

While the calendering system 1 performs calendering or compressing, the thickness of the calendered mixture 110 in the width direction may not be constant. When the thickness of the mixture 110 in the width direction is not constant, there may be a problem in which the thickness of the electrode 100 formed thereby is not constant as well. Furthermore, when the thickness of the mixture 110 in the width direction is not constant, the electricity generated by the mixture 110 may not be uniform with respect to the width direction. In order to solve this problem, as described below, it is necessary to first sense the thickness of the mixture 110. This will be described in more detail below with reference to the drawings.

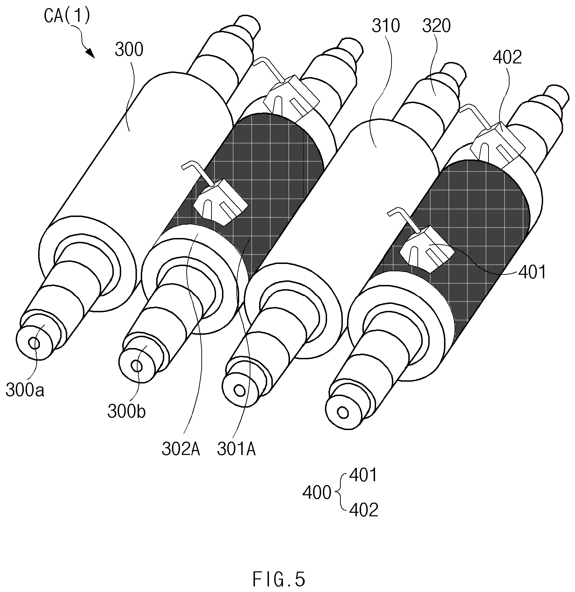

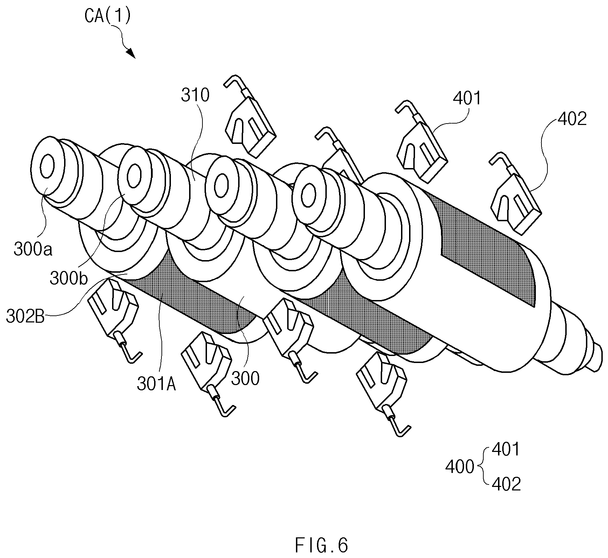

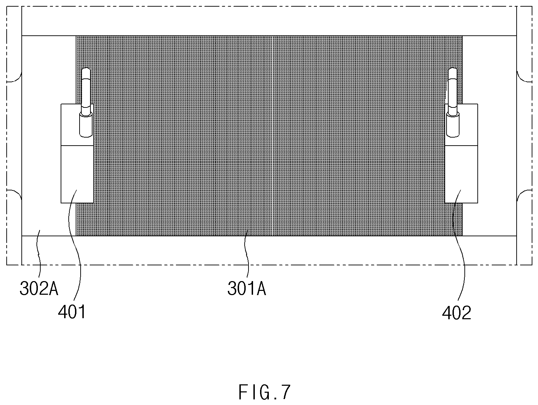

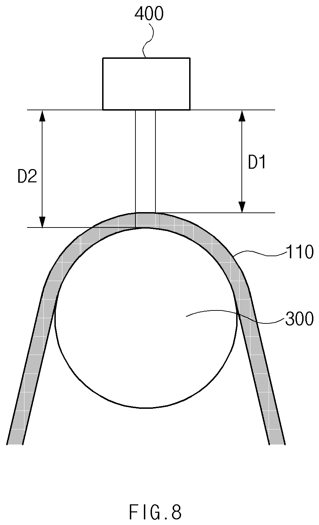

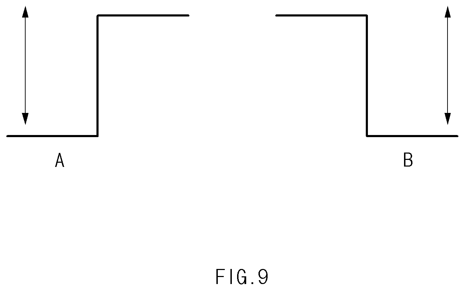

FIG. 5 is a perspective view illustrating a part of the calendering system 1 illustrated in FIG. 4. FIG. 6 is a perspective view illustrating a part of the calendering system 1 illustrated in FIG. 5 from a different angle. FIG. 7 is a plan view illustrating the calender roll 300, the mixture 110, and the sensor device 400 illustrated in FIG. 5. FIG. 8 is a conceptual diagram illustrating that the sensor device 400 illustrated in FIG. 5 senses the mixture 110 and the calender roll 300. FIG. 9 is a graph illustrating the results measured by FIG. 8.

Referring to FIGS. 5 to 9, the calendering system 1 according to the first embodiment of the present disclosure will be described in more detail.

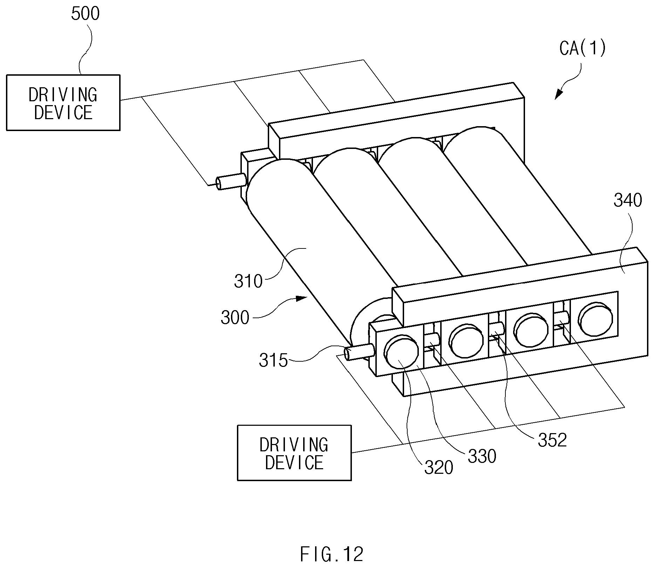

The calender roll 300 mentioned above may be included in the calendering apparatus CA. The calendering apparatus CA may be configured to compress the mixture 110 including an active material and a binder. The calendering apparatus CA may be a concept that includes a device for moving the calender roll 300 described below with reference to FIG. 12 and the like. Furthermore, the calendering apparatus CA may be included in the calendering system 1. The calendering system 1 may include the calendering apparatus CA and a sensor device 400 to be described later.

The calender roll 300 may include a roll body 310 configured to be adjacent to the mixture 110, as illustrated in FIGS. 5 and 6. The roll body 310 may have a substantially cylindrical shape. The calender roll 300 may include a roll shaft 320 extending from an end of the roll body 310 in the length direction. The roll shafts 320 may be provided as a pair, each extending from both ends of the roll body 310. The pair of roll shafts 320 may be rotated by receiving driving force from a driving unit (not shown) that may be provided as a motor or an actuator. At this time, the roll body 310 may be rotated according to the rotation of the roll shaft 320. For reference, the roll shaft 320 and the roll body 310 may be formed integrally, or may be formed separately and then coupled to each other.

As illustrated in FIGS. 5 and 6, the calender roll 300 may have an overlapping area 301A positioned to overlap with the mixture 110 and a non-overlapping area 302A positioned to limit overlapping with the mixture 110. More specifically, the overlapping area 301A and the non-overlapping area 302A may be formed in the roll body 310.

As illustrated in FIGS. 5 and 6, the calendering system 1 may include a pair of sensor devices 400 configured to sense a mixture 110 having a pair of edges adjacent to the non-overlapping area 302A and the non-overlapping area 302A. In particular, as illustrated in FIG. 7, the pair of sensor devices 400 may be positioned to sense a pair of edges positioned in the width direction of the mixture 110, respectively. Furthermore, the pair of sensor devices 400 may sense not only the edges of the mixture 110, but also the calender roll 300.

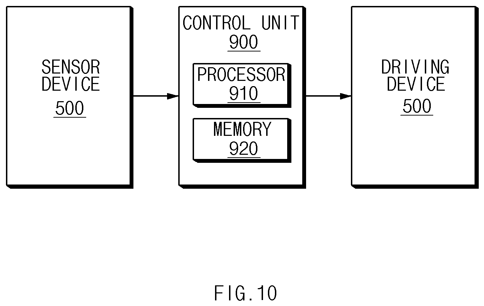

At this time, the calendering system 1 may include a control unit 900 configured to determine the thickness at each of the pair of edges of the mixture 110 based on information on the mixture 110 and the non-overlapping area 302A sensed by the pair of sensor devices 400, as illustrated in FIG. 10.

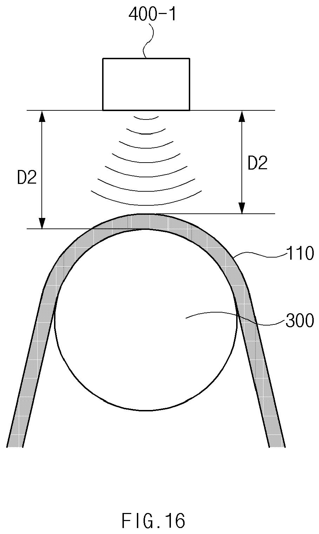

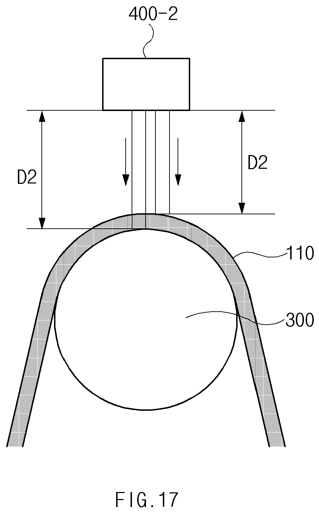

More specifically, the sensor device 400 may be a laser profile measuring device. The laser profile measuring device may be a device capable of measuring a distance between an object to be measured by a laser and the laser profile measuring device. Hereinafter, for convenience of description, it is assumed that the sensor device 400 includes a laser profile measuring device, but the idea of the present disclosure may be applied to sensor devices 400 other than the laser profile measuring device. For example, it may be applied to another embodiment to be described in FIGS. 16 and 17, or to a sensing device by a method of measuring heat by infrared rays or the like. For example, the thickness of the mixture 110 may be determined by using the temperature in the calender roll 300 and the degree of temperature in the mixture 110.

When the sensor device 400 is a laser profile measuring device, the distance D1 from the sensor device 400 to the mixture 110 may be measured as illustrated in FIG. 8. Furthermore, the distance D2 from the sensor device 400 to the surface of the calender roll 300 may be measured. At this time, the distance from the sensor device 400 to the surface of the calender roll 300 may be obtained by measuring the distance D2 from the sensor device 400 to the non-overlapping area 302A. Accordingly, as illustrated in FIG. 9, the thickness at the pair of edges of the mixture 110 may be defined as the distance D2 from the sensor device 400 to the non-overlapping area 302A minus the distance D1 to the edge of the mixture 110.

At this time, the pair of sensor devices 400 may be positioned adjacent to the boundary of the non-overlapping area 302A and the overlapping area 301A, as illustrated in FIG. 7. Each of the sensor devices 400 needs to be able to measure both the distance from the sensor device 400 to the mixture 110 and the distance from the sensor device 400 to the surface of the calender roll 300. This is because if separate sensor devices 400 are to be used for each measurement, twice as many sensor devices 400 are used, causing economic loss. To solve this problem, the sensor device 400 may be positioned adjacent to the edge of the mixture 110, so that the distance to the mixture 110 and the distance to the surface of the calender roll 300 may be measured with one sensor device 400. However, when it is not intended to measure the distance to the mixture 110 and the distance to the surface of the calender roll 300 with one sensor device 400, the sensor device 400 may not necessarily be positioned adjacent to the edge of the mixture 110.

At this time, the control unit 900 may be configured to determine whether the thickness of the mixture 110 is constant between the pair of edges based on the determined thickness information at each of the pair of edges of the mixture 110. In other words, the control unit 900 may obtain information on the thickness of the mixture 110 at each of the pair of edges of the mixture 110, as illustrated in FIG. 9. When the thickness of the mixture 110 is consistent at each of the edges of the mixture 110, it may be determined that the thickness of the mixture 110 is constant with respect to the width direction. When the thickness of the mixture 110 is different at each of the edges of the mixture 110, the thickness of the mixture 110 may be viewed as changing between both edges, and it may be determined that the thickness of the mixture 110 is not constant with respect to the width direction. At this time, it may be determined that the thickness of the mixture 110 positioned between both edges of the mixture 110 changes linearly. This may be because it is difficult for the thickness of the mixture 110 to change abruptly with respect to the width direction when the calender roll 300 is moved by the device illustrated in FIG. 12 and the like.

In other words, the above is as follows. The control unit 900 may be configured to determine that the calendering is normal when the difference between the determined thicknesses at each of the pair of edges of the mixture 110 is less than or equal to a predetermined range. Furthermore, the control unit 900 may be configured to control the calender roll 300 to reduce the thickness difference when the difference between the determined thicknesses at each of the pair of edges of the mixture 110 is greater than or equal to a predetermined range. The control of the calender roll 300 to make the thickness of the mixture 110 constant will be described in more detail in the description with reference to FIG. 12 and the like.

At this time, as illustrated in FIG. 6, the calender rolls 300 may be provided in plurality so that the mixture 110 is moved and compressed therebetween. Furthermore, a pair of sensor devices 400 may be provided in plurality to correspond to at least one of each of the plurality of calender rolls 300. Accordingly, thickness information of the mixture 110 in each of the plurality of calender rolls 300 may be obtained. In other words, the control unit 900 may obtain information on the thickness of each of the mixture 110 passing through the plurality of calender rolls 300 based on information obtained from each of the plurality of pairs of sensor devices 400. As the thickness of the mixture 110 may be adjusted at a plurality of points, the thickness of the mixture 110 may be controlled more precisely.

At this time, the positions of the plurality of pairs of sensor devices 400 may be defined as follows. First, a virtual plane including a rotation shaft of each of the plurality of calender rolls 300 may be defined. As mentioned above, the plurality of calender rolls 300 may include a first calender roll 300a and a second calender roll 300b adjacent to the first calender roll 300a. As illustrated in FIG. 6, the overlapping area 301A of the second calender roll 300b may be positioned on the opposite side to the overlapping area 301A of the first calender roll 300a with respect to the virtual plane. At this time, the plurality of pairs of sensor devices 400 may include a first pair of sensor devices 400a sensing the first calender roll 300a and a second pair of sensor devices 400b sensing the second calender roll 300b. The second pair of sensor devices 400b may be positioned on the opposite side to the first pair of sensor devices 400a with respect to the virtual plane. In other words, the plurality of pairs of sensor devices 400 may be arranged in a zigzag manner with respect to each of the plurality of calender rolls 300.

To summarize the above again, the calendering system 1 may measure the thickness of the edges positioned on opposite sides with respect to the width direction of the mixture 110 to measure the thickness of the mixture 110 compressed by the calender roll 300. The thickness may be measured by measuring the distance from the sensor device 400 to the mixture 110 and the distance from the sensor device 400 to the surface of the calender roll 300, and using the difference between the two distance values. It is possible to determine whether there is a thickness difference in the width direction of the mixture 110 by determining whether the difference in the thickness at both edges of the mixture 110 is the same or different. If there is a thickness difference in the width direction of the mixture 110, the calender roll 300 may be controlled to move to reduce the thickness difference.

Hereinafter, the control of the control unit 900 that performs the above control will be described in more detail.

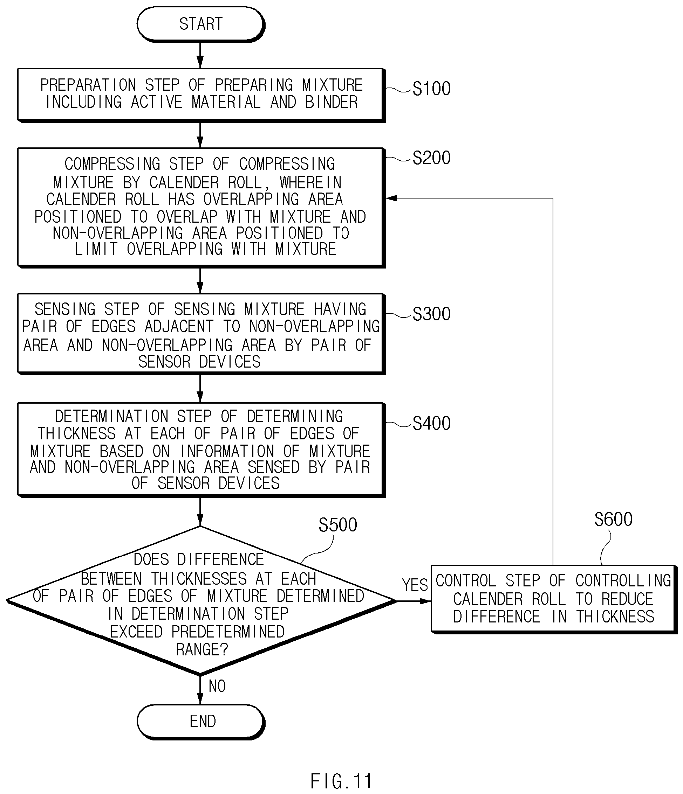

FIG. 10 is a control block diagram of the calendering system 1 illustrated in FIG. 5. FIG. 11 is a flow chart of a calendering step performed by the control unit 900 illustrated in FIG. 10.

Referring to FIGS. 10 and 11, a control method of the calendering system 1 according to the first embodiment of the present disclosure will be described.

As illustrated in FIG. 10, the calendering system 1 may include a control unit 900. The control unit 900 may be configured to command other configurations to be controlled. More specifically, the control unit 900 may be configured to control the driving device 500 based on information obtained from the sensor device 400.

The control unit 900 may include a memory 920. The memory 920 may include a volatile memory 920 such as a static random access memory (S-RAM) and a dynamic random access memory (D-RAM) for temporarily storing data. Additionally, the memory 920 may include a nonvolatile memory 920 such as a read only memory (ROM), an erasable programmable read only memory (EPROM), and an electrically erasable programmable read only memory (EEPROM) for storing data for a long period of time.

The control unit 900 may include a processor 910. The processor 910 may generate a control signal for controlling the operation of the driving device 500, shaft, and/or cam based on instructions, applications, data, and/or programs stored in the memory 920. The processor 910 is hardware and may include a logic circuit and an arithmetic circuit. The processor 910 may process data according to a program and/or instructions provided from the memory 920, and generate a control signal according to the processing result. The memory 920 and the processor 910 may be implemented as one control circuit or as a plurality of circuits. For example, the processor 910 may be implemented as a central processing unit (CPU), an application processor (AP), or a microprocessor 910.

The above program may include program(s) implemented in the form of at least one of a BIOS, a device driver, an operating system, firmware, a platform, and an application program (application). In one embodiment, the application program may be pre-installed or stored in the kneading device or the kneading system when manufacturing the kneading device or the kneading system, or may be installed in the kneading device or the kneading system based on the received data by receiving the application program data from an external source for later use. The application program data may be downloaded to the kneading device or the kneading system from an external server such as an application market (app store), for example. Such an external server is an example of the computer program product of the present disclosure, but is not limited thereto.

The control unit 900 may control the driving device 500 to be described later based on the information obtained from the sensor device 400. By controlling the driving device 500, the calender roll 300 may be moved, and accordingly, the gap between the calender rolls 300 may be adjusted. This will be described in more detail in the description referring to FIG. 12 and the like.

The control unit 900 may perform control such as the flow chart illustrated in FIG. 11. However, the control that may be performed by the control unit 900 is not limited to those illustrated in FIG. 11. Furthermore, the control unit 900 according to the first embodiment of the present disclosure may control other configurations included in the calendering system 1 to perform the electrode 100 manufacturing method. The electrode 100 manufacturing method in the present disclosure may refer to an electrode 100 manufacturing method for manufacturing a mixture 110 or an electrode 100 having a constant thickness.

As illustrated in FIG. 11, the electrode 100 manufacturing method may include a preparation step S100 of preparing a mixture 110 including an active material and a binder. The electrode 100 manufacturing method may include a compressing step S200 of compressing the mixture 110 by the calender roll 300, wherein the calender roll 300 has an overlapping area 301A positioned to overlap with the mixture 110 and a non-overlapping area 302A positioned to limit overlapping with the mixture 110. The electrode 100 manufacturing method may include a sensing step S300 of sensing the mixture 110 having a pair of edges adjacent to the non-overlapping area 302A and the non-overlapping area 302A by a pair of sensor devices 400. The electrode 100 manufacturing method may include a determination step S400 of determining a thickness at each of the pair of edges of the mixture 110 based on information of the mixture 110 and the non-overlapping area 302A sensed by the pair of sensor devices 400. After determining the thickness of the mixture 110, it is determined whether the difference between the thicknesses at each of the pair of edges of the mixture 110 determined in the determination step S400 is less than or equal to a predetermined range, and if the difference in thickness at each of the edges is less than or equal to a predetermined range, the calendering is reported to be performed normally and the above adjustment process is completed, and if the difference in thickness at each of the edges exceeds a predetermined range, a control step S600 of controlling the calender roll 300 to reduce the difference in thickness may be performed. Here, the above description assumes that the calendering system 1 is controlled so that there is no thickness difference at both edges of the mixture 110, but in reality, it is difficult that there is no thickness difference. Therefore, by allowing a thickness difference that will not cause a significant difference in quality, the control unit 900 may control the difference in thickness of the mixture 110 in the width direction not to be less than the corresponding thickness difference.

This control may be performed in real time based on information obtained by the sensor device 400 while the calendering is performed. The electrode 100 manufacturing step may be progressed by a feedback system, and thus may be performed to find an optimized value while the step is in progress. Accordingly, by shortening the control time to have an appropriate electrode 100 thickness, a fast process may be performed.

Hereinafter, a method for controlling the calendered thickness of the mixture 110 will be described in detail. The following method describes in detail a method for adjusting the thickness of the mixture 110 by controlling the position of the calender roll 300.

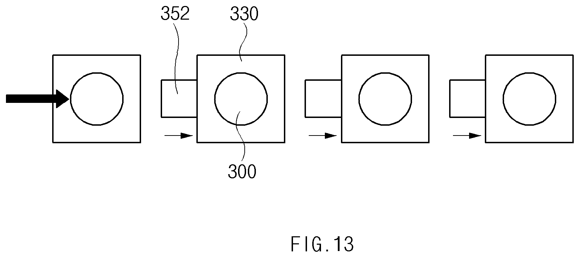

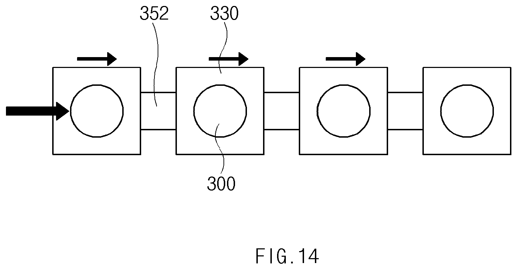

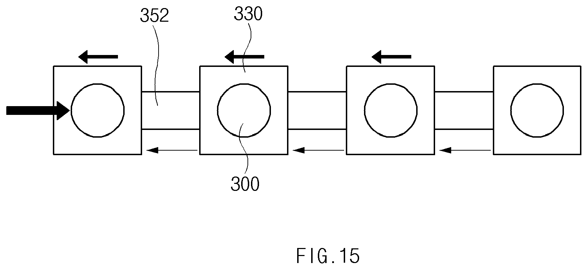

FIG. 12 is a perspective view including the remaining part of the calendering system 1 illustrated in FIG. 5. FIG. 13 is a conceptual diagram for describing position control of the calender rolls 300 illustrated in FIG. 12. FIG. 14 is a conceptual diagram illustrating that the calender rolls 300 illustrated in FIG. 13 move in a direction closer to each other. FIG. 15 is a conceptual diagram illustrating that the calender rolls 300 illustrated in FIG. 14 move in a direction farther away from each other.

Referring to FIGS. 12 to 15, a calendering apparatus CA capable of controlling the calender roll 300 according to the first embodiment of the present disclosure will be described.

As illustrated in FIG. 12, the calendering apparatus CA may include a coupling member 330 coupled to the calender roll 300. The coupling member 330 may be coupled to an end of the calender roll 300, that is, the roll shaft 320. At this time, the coupling member 330 may be coupled to the roll shaft 320 so that the roll shaft 320 is rotatable. For example, the roll shaft 320 and the coupling member 330 may be coupled by a bearing or the like. Accordingly, while the roll shaft 320 is rotated to rotate the calender roll 300, the coupling member 330 may be moved to move the roll shaft 320.

The coupling members 330 may be provided in a pair to be coupled to both ends of the calender roll 300. Each of the coupling members 330 may be coupled to each of the roll shafts 320. That is, two coupling members 330 may be coupled to one calender roll 300. The coupling members 330 may be provided in plurality to correspond to the plurality of calender rolls 300. In other words, one pair of coupling members 330 may be provided to correspond to one calender roll 300, and the plurality of pairs of coupling members 330 may be provided to correspond to the plurality of calender rolls 300.

The calendering apparatus CA may include a coupling member guide 340 to guide the plurality of coupling members 330 positioned on the same side among the plurality of pairs of coupling members 330. The coupling member guide 340 may be formed to have a space formed with an opening on one side. As illustrated in FIG. 12, the coupling member guide 340 may have a shape in which "U" is rotated. The space formed by the coupling member guide 340 has a width corresponding to the height of the coupling member 330 and may extend in a direction in which the plurality of coupling members 330 are arranged. Accordingly, the coupling member 330 is restricted from moving in the height direction of the coupling member 330 by the coupling member guide 340, and may be moved in the direction in which the plurality of coupling members 330 are arranged by the coupling member guide 340. However, the coupling member guide 340 to which the idea of the present disclosure may be applied is not limited thereto, and the coupling member guide 340 may have a different shape in addition to the shape illustrated in FIG. 12. For example, the coupling member guide 340 may have a shape of a rail. The coupling member 330 may have a groove or protrusion, and the coupling member guide 340 may have a protrusion or groove corresponding thereto to guide the movement of the coupling member 330. Alternatively, the coupling member guide 340 may restrict not only the movement of the coupling member 330 in the upper-lower direction as illustrated in FIG. 12, but also the movement of the coupling member 330 in the front-back direction.

Both ends of the calender roll 300 may be moved according to the movement of the coupling members 330. At this time, the calendering apparatus CA may further include moving devices 351, 352 configured to move one end of the calender roll 300 in the length direction or the other end positioned on the opposite side of the one end. More specifically, the moving devices 351, 352 may move one end or the other end of the calender roll 300 by moving the coupling member 330. At this time, the control unit 900 may be configured to control the moving devices 351, 352 to move at least one of one end or the other end of the calender roll 300 when the difference between the determined thicknesses at each of the pair of edges of the mixture 110 is greater than or equal to a predetermined range. More specifically, as the moving devices 351, 352 move, the coupling member 330 may move, and as the coupling member 330 moves, the calender roll 300 may move.

At this time, the moving devices 351, 352 may be connected to the driving device 500 previously configured to be controlled by the control unit 900. The driving device 500 may be configured to provide a driving force so that the moving devices 351, 352 are driven. The driving device 500 may be connected to a first moving device 351 and a second moving device 352 described below. Here, the driving device 500 may be an actuator, a motor, a hydraulic device, or the like.

The moving devices 351, 352 may include a first moving device 351 configured to move a coupling member 330 positioned at the outermost side among the plurality of coupling members 330 and a second moving device 352 positioned between the plurality of coupling members 330. The first moving device 351 and the second moving device 352 may be hydraulic cylinders. However, the present disclosure is not limited thereto, and may be a device whose shape may be changed by a gear or the like.

For more detailed description, refer to FIGS. 13 to 15. For convenience of description, the position change of all, not some, of the plurality of calender rolls 300 will be described below. It may be understood that the position change of some of the plurality of calender rolls 300 is performed by applying the same principle.

As illustrated in FIG. 13, the second moving device 352 may be reduced to reduce the distacne between the plurality of calender rolls 300. Accordingly, a gap may be generated between the plurality of coupling members 330.

As illustrated in FIG. 14, the first moving device 351 may pressurize the coupling member 330 positioned at the outermost side so that the gap between the coupling members 330 becomes narrower. In FIG. 14, it is illustrated that the first moving device 351 pressurizes the coupling member 330 positioned at the leftmost side to the right. Accordingly, the coupling member 330 and the second moving device 352 may be in contact with each other. At this time, when a force with which the second moving device 352 supports the coupling member 330 corresponds to a force with which the first moving device 351 pressurizes the coupling member 330 positioned at the outermost side, the movement of the coupling member 330 may be completed. While the coupling members 330 are moved in the order of FIG. 13 to FIG. 14, the gap between the plurality of calender rolls 300 may be narrowed. Accordingly, the thickness of the mixture 110 may be thinner.

When the coupling members 330 are moved in the order of FIG. 14 to FIG. 15, the gap between the plurality of calender rolls 300 may be widened. Accordingly, the thickness of the mixture 110 may be thicker.

More specifically, as illustrated in FIG. 15, the second moving device 352 may be deformed in a direction in which the thickness thereof becomes thicker. The second moving device 352 may pressurize the adjacent coupling member 330 with a force stronger than the force with which the first moving device 351 pressurizes the outermost coupling member 330. When the second moving device 352 is expanded, the coupling member 330 may be moved in a direction in which the gap between the adjacent plurality of coupling members 330 increases. When the gap between the plurality of coupling members 330 increases, the gap between the plurality of calender rolls 300 may increase. Accordingly, the thickness of the mixture 110 may be thicker.

According to the above process, when the moving devices 351, 352 operate to change the gap between some of the entire calender rolls 300, only the thickness of the mixture 110 passing between some of the calender rolls 300 may be changed. Furthermore, when only the position of one end of the calender roll 300 is changed, only the thickness of the mixture 110 at the one end may be changed. Accordingly, when there is a difference in the thickness of the edge of the mixture 110, the edge of each of the mixture 110 may be adjusted by adjusting both ends of the calender roll 300.

The following example may be given to describe this adjustment.

Based on those illustrated in FIG. 15, the plurality of calender rolls 300 may be defined as, from left to right, a first calender roll 300a, a second calender roll 300b, a third calender roll 300, and a fourth calender roll 300, and the following situation may be assumed. Furthermore, as illustrated in FIG. 9, the thickness of the mixture 110 measured by the first sensor device 401 is defined as the "thickness at A," and the thickness of the mixture 110 measured by the second sensor device 402 is defined as the "thickness at B." In the following, the "target thickness" is the desired thickness. At this time, the "action at A" and the "action at B" are each described in Table 1 below.

**[Table 1]**

| | Thickness at A (mm) | Thickness at B (mm) | Target thickness(mm) | Action at A | Action at B |
|---|---|---|---|---|---|
| First calender roll 300a | 205 | 203 | 200 | Reduce gap by 5 mm. | Reduce gap by 3 mm. |
| Second calender roll 300b | 152 | 140 | 150 | Reduce gap by 2 mm. | Widen gap by 10 mm. |
| Third calender roll 300 | 95 | 99 | 100 | Widen gap by 5 mm. | Maintain. |
| Fourth calender roll 300 | 55 | 47 | 50 | Reduce gap by 5 mm. | Widen gap by 3 mm. |

The electrode 100 produced in this way may include a mixture 110 in which the thickness of the mixture 110 in the width direction is uniform in one part and increases in the width direction in another part. Since the process of finding that the thickness of the edge is not uniform and adjusting the thickness of the edge to be uniform is performed, some of the specific electrode 100 may include a part with a uniform edge and a part with a nonuniform edge. At this time, the part in which the edge is not uniform is due to the alignment of the calender roll 300 being oblique, and thus the thickness of the mixture 110 may be provided to change linearly. Hereinafter, embodiments different from the first embodiment will be described. The common contents with the first embodiment will be omitted as much as possible, and other embodiments will be described mainly focusing on the differences. That is, it is obvious that the contents not described in other embodiments may be supplemented through the contents of the first embodiment if necessary.

### Second embodiment

FIG. 16 is a plan view illustrating a sensor device 400-1 according to a second embodiment of the present disclosure.

Referring to FIG. 16, the sensor device 400-1 according to the second embodiment of the present disclosure is described.

The second embodiment differs from the first embodiment in that the sensor device 400-1 is a sonar device using sound waves, not a laser profile measuring device.

### Third embodiment

FIG. 17 is a plan view illustrating a sensor device 400 according to a third embodiment of the present disclosure.

Referring to FIG. 17, the sensor device 400-2 according to the third embodiment of the present disclosure is described.

The third embodiment differs from the first embodiment in that the sensor device 400-2 is a device measuring thickness by a physical method, not a laser profile measuring device.

The sensor device 400-2 may include a protruding portion whose length changes. As the protruding portion contacts the mixture 110 or the surface of the calender roll 300, the thickness of the mixture 110 may be measured. This contact measurement may be more accurate than a non-contact measurement.

### Fourth embodiment

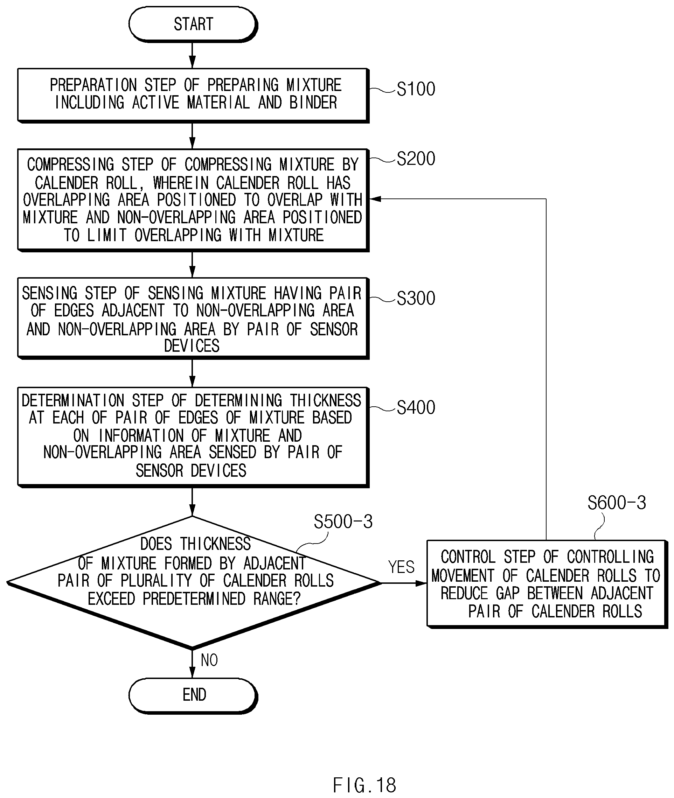

FIG. 18 is a flow chart of a calendering step according to a fourth embodiment of the present disclosure.

Referring to FIG. 18, the calendering step according to the fourth embodiment of the present disclosure is described.

The fourth embodiment differs from the first embodiment in that the gap between the plurality of calender rolls 300 is adjusted so that the thickness of the mixture 110 becomes thinner or thicker, rather than adjusting the gap between the plurality of calender rolls 300 for uniformity in the thickness of the mixture 110.

The electrode 100 manufacturing method may, after the determination step, determine whether the thickness of the mixture 110 formed by an adjacent pair of the plurality of calender rolls 300 exceeds a predetermined range (S500-3).

In other words, the control unit 900 may control the movement of the calender roll 300 to reduce the gap between the adjacent pair of calender rolls 300 when the thickness of the mixture 110 formed by the adjacent pair of the plurality of calender rolls 300 exceeds a predetermined range (S600-3).

The control unit 900 may control the movement of the calender roll 300 to widen the gap between the adjacent pair of calender rolls 300 when the thickness of the mixture 110 formed by the adjacent pair of the plurality of calender rolls 300 is less than a predetermined range.

The control unit 900 may leave the gap between the adjacent calender rolls 300 as it is when the thickness of the mixture 110 formed by the adjacent pair of the plurality of calender rolls 300 is a predetermined thickness.

### Fifth embodiment

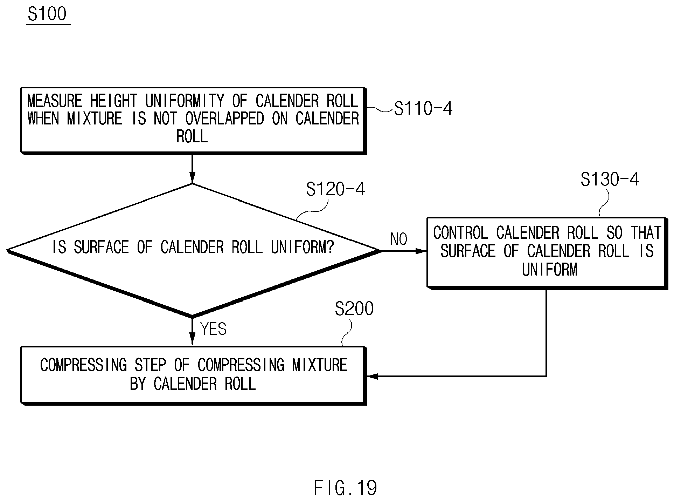

FIG. 19 is a flow chart of a calendering step according to a fifth embodiment of the present disclosure.

Referring to FIG. 19, the calendering step according to the fifth embodiment of the present disclosure is described.

The fifth embodiment differs from the first embodiment in that the reliability of the determined thickness of the mixture 110 may be improved by measuring the surface uniformity of the calender rolls 300 before measuring the thickness of the mixture 110 in calendering.

In other words, the control unit 900 may be configured to measure the surface uniformity of the calender roll 300 when the mixture 110 is not overlapped on the calender roll 300 (S110-4). More specifically, the surface uniformity of the roll body 310 may be measured. When the surface of the calender roll 300 is uniform (S120-4), the compressing step S200 may proceed. However, when the surface of the calender roll 300 is not uniform (S120-4), the calender roll 300 is controlled so that the surface of the calender roll 300 is uniform (S130-4), and then the compressing step S200 may proceed.

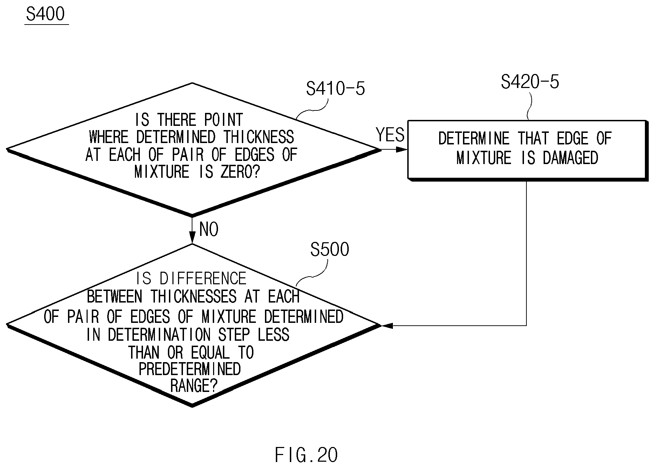

FIG. 20 is a flow chart of a calendering step according to a sixth embodiment of the present disclosure.

Referring to FIG. 20, the calendering step according to the sixth embodiment of the present disclosure is described.

The sixth embodiment differs from the first embodiment in that damage at the edge of the mixture 110 may be further determined by the present disclosure.

It may be determined whether there is a point where the determined thickness at each of the pair of edges of the mixture 110 is zero (S410-5). If it is determined that there is a point where the thickness is zero, it may be determined that the edge of the mixture 110 is damaged (S420-5). In other words, the control unit 900 may determine that the edge of the mixture 110 is damaged based on the determined thickness being zero at each of the pair of edges of the mixture 110.

If there is no point where the thickness is zero (S410-5), subsequent steps may proceed. For example, it may be determined whether the difference between the thicknesses at each of the pair of edges of the mixture 110 determined in the determination step is less than or equal to a predetermined range (S500).

Unless explicitly stated, the embodiments described above may be combined with other embodiments. Alternatively, it should be considered that combinations between embodiments are possible unless one embodiment is expressly limited in combination with another embodiment. Combinations of any embodiment with another embodiment are deemed to be disclosed herein.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

### [List of Reference Numerals]

1: Calendering system
B: Secondary battery
EA: Electrode assembly
ES: Electrode stack
100: Electrode
110: Mixture
110a: Positive electrode mixture
110b: Negative electrode mixture
111: Active material
112: Binder
112a: Fiberized binder
113: Conductive material
120: Current collector
121: Electrode tab
130: Electrode lead
131: Insulating portion
140: Separator
200: Battery case
210: Receiving portion
210S: Electrode receiving space
220: Side portion
221: Lead sealing portion
222: Degas portion
223: Folding portion
CA: Calendering apparatus
300: Calender roll
300a: First calender roll
300b: Second calender roll
301A: Overlapping area
302A: Non-overlapping area
310: Roll body
320: Roll shaft
330: Coupling member
340: Coupling member guide
351: First moving device
352: Second moving device
400: Sensor device
400a: First pair of sensor devices
400b: Second pair of sensor devices
401: First sensor device
402: Second sensor device
500: Driving device
900: Control unit
910: Processor
920: Memory

## Claims

1. A calendering system comprising:
a calendering apparatus configured to compress a mixture comprising an active material and a binder, the calendering apparatus comprising a calender roll having an overlapping area positioned to overlap with the mixture and a non-overlapping area positioned to limit overlapping with the mixture;
a pair of sensor devices configured to sense the mixture having a pair of edges adjacent to the non-overlapping area and the non-overlapping area; and
a control unit configured to determine a thickness at each of the pair of edges of the mixture based on information of the mixture and the non-overlapping area sensed by the pair of sensor devices.

2. The calendering system according to claim 1,
wherein the sensor device comprises a laser profile measuring device.

3. The calendering system according to claim 1,
wherein the thickness at the pair of edges of the mixture is defined as the distance from the sensor device to the non-overlapping area minus the distance to the edge of the mixture.

4. The calendering system according to claim 1,
wherein the control unit is configured to determine whether the thickness of the mixture is constant between the pair of edges based on the determined thickness information at each of the pair of edges of the mixture.

5. The calendering system according to claim 1,
wherein the control unit is configured to determine that the calendering is normal when the difference between the determined thicknesses at each of the pair of edges of the mixture is less than or equal to a predetermined range.

6. The calendering system according to claim 1,
wherein the control unit is configured to control the calender roll to reduce a difference in thickness when the difference between the determined thicknesses at each of the pair of edges of the mixture is greater than or equal to a predetermined range.

7. The calendering system according to claim 1, further comprising:
a moving device configured to move one end of the calender roll in the length direction or the other end positioned on the opposite side of the one end,
wherein the control unit is configured to control the moving device to move at least one of the one end or the other end of the calender roll when the difference between the determined thicknesses at each of the pair of edges of the mixture is greater than or equal to a predetermined range.

8. The calendering system according to claim 1,
wherein the pair of sensor devices are positioned adjacent to a boundary of the non-overlapping area and the overlapping area.

9. The calendering system according to claim 1,
wherein the calender rolls are provided in plurality so that the mixture is moved and compressed therebetween, and
the pair of sensor devices are provided in plurality to correspond to at least one of each of the plurality of calender rolls.

10. The calendering system according to claim 9,
wherein a virtual plane comprising a rotating shaft of each of the plurality of calender rolls is defined,
the plurality of calender rolls comprise a first calender roll and a second calender roll adjacent to the first calender roll,
an overlapping area of the second calender roll is positioned on the opposite side to an overlapping area of the first calender roll with respect to the virtual plane,
the plurality of pairs of sensor devices comprises a first pair of sensor devices sensing the first calender roll and a second pair of sensor devices sensing the second calender roll, and
the second pair of sensor devices are positioned on the opposite side to the first pair of sensor devices with respect to the virtual plane.

11. The calendering system according to claim 9,
wherein the control unit obtains information on the thickness of each of the mixture passing through the plurality of calender rolls based on information obtained from each of the plurality of pairs of sensor devices.

12. The calendering system according to claim 11,
wherein the control unit controls movement of the calender rolls to reduce the gap between the adjacent pair of calender rolls when the thickness of the mixture formed by the adjacent pair of the plurality of calender rolls exceeds a predetermined range.

13. The calendering system according to claim 1,
wherein the control unit controls movement of the calender rolls to widen the gap between the adjacent pair of calender rolls when the thickness of the mixture formed by the adjacent pair of the plurality of calender rolls is less than a predetermined range.

14. The calendering system according to claim 1,
wherein the control unit determines that the edge of the mixture is damaged based on the determined thickness being zero at each of the pair of edges of the mixture.

15. The calendering system according to claim 1,
wherein the control unit is configured to measure the surface uniformity of the calender roll when the mixture is not overlapped on the calender roll.

16. An electrode manufacturing method comprising:
a preparation step of preparing a mixture comprising an active material and a binder;
a compressing step of compressing the mixture by a calender roll, wherein the calender roll has an overlapping area positioned to overlap with the mixture and a non-overlapping area positioned to limit overlapping with the mixture;
a sensing step of sensing the mixture having a pair of edges adjacent to the non-overlapping area and the non-overlapping area by a pair of sensor devices; and
a determination step of determining a thickness at each of the pair of edges of the mixture based on information of the mixture and the non-overlapping area sensed by the pair of sensor devices.

17. The electrode manufacturing method according to claim 16,
wherein the sensor device comprises a laser profile measuring device.

18. The electrode manufacturing method according to claim 16,
wherein the determination step is performed to determine the thickness at the pair of edges of the mixture as the distance from the sensor device to the non-overlapping area minus the distance to the edge of the mixture.

19. The electrode manufacturing method according to claim 16, further comprising:
a control step of controlling the calender roll to reduce a difference in thickness when the difference between the thicknesses at each of the pair of edges of the mixture determined in the determination step is greater than or equal to a predetermined range.

20. An electrode comprising:
a mixture comprising an active material and a binder; and
a current collector to which the mixture is coupled,
wherein the thickness of the mixture in the width direction is uniform in one part and increases in the width direction in another part.
